# EUROPÄISCHE PATENTSCHRIFT

(11) **EP 3 929 016 B1**
(45) Veröffentlichungstag und Bekanntmachung des Hinweises auf die Patenterteilung: **17.04.2024**
(21) Anmeldenummer: 21179204.9
(22) Anmeldetag: 14.06.2021
(51) Int. Cl.: B60K 17/00, B60K 17/02, B60K 17/06, B60K 17/08, F16H 57/02, B60K 23/08, F16H 57/021

(54) **GETRIEBEBAUGRUPPE, KUPPLUNGSMODUL UND FAHRZEUG**
TRANSMISSION ASSEMBLY, CLUTCH MODULE AND VEHICLE
ENSEMBLE TRANSMISSION, MODULE D'EMBRAYAGE ET VÉHICULE

(30) Priorität: 23.06.2020 DE 102020207779
(43) Veröffentlichungstag der Anmeldung: 29.12.2021
(73) Patentinhaber: Deere & Company, Moline, IL 61265 (US)
(72) Erfinder: PETERS, JOSEF, 68163 Mannheim (DE); EISENHARDT, CHRISTOPH, 68163 Mannheim (DE); RAISCH, STEFAN, 68163 Mannheim (DE); BUSOLD, THOMAS, 68163 Mannheim (DE); NEUMANN, CLAYTON P, 68163 Mannheim (DE)
(74) Vertreter: Stein, Stefan

(56) Entgegenhaltungen:
- DE-T2- 60 127 348
- US-A1- 2005 205 386
- US-B1- 6 206 128

## Beschreibung

Die vorliegende Erfindung betrifft eine Getriebebaugruppe für ein einen zuschaltbaren Vorderradantrieb aufweisendes Fahrzeug, insbesondere ein landwirtschaftliches oder industrielles Arbeitsfahrzeug, mit einem Getriebegehäuse, einem Kupplungsmodul und einem Hydraulikmodul, ein Kupplungsmodul für eine Getriebebaugruppe und ein Fahrzeug, insbesondere ein landwirtschaftliches oder industrielles Arbeitsfahrzeug, mit einer Getriebebaugruppe.

Nutzfahrzeuge und andere geländegängige Fahrzeuge können mit einem mechanischen Vorderradantrieb ausgestattet sein, um die Vorderräder anzutreiben, beispielsweise um die Traktion zu verbessern. Der Vorderradantrieb bzw. ein Kupplungsmodul des Vorderradantriebs ist üblicherweise an bzw. meist unterhalb eines Getriebegehäuses vorgesehen. Eine Vorderradantriebswelle des Vorderradantriebs ist derart angeordnet, dass sie mit einer Vorderachse des Fahrzeugs verbindbar ist, um vordere Räder des Fahrzeugs anzutreiben. In einem Frontbereich des Getriebegehäuses ist häufig eine Hydraulikversorgung mit diversen Anschlüssen vorgesehen, über die auch der Vorderradantrieb mit Schmier- bzw. Hydraulikmittel versorgt werden kann. Eine derartige Anordnung ist aufwendig und/oder erschwert eine Reparatur bzw. einen Austausch des Vorderradantriebs bzw. des Kupplungsmoduls. Die DE 601 27 348 T2 offenbart eine Abtriebswellenanordnung für ein Arbeitsfahrzeug, bei der eine hintere- oder vordere Abtriebswelle insbesondere zusätzlich zu einer mittleren Abtriebswelle vorgesehen ist.

Die der Erfindung zugrunde liegende Aufgabe wird daher darin gesehen, eine Getriebebaugruppe, ein Kupplungsmodul und Fahrzeug vorzusehen, durch welche die vorgenannten Nachteile überwunden werden.

Die Aufgabe wird erfindungsgemäß durch die Lehre der Patentansprüche 1, 6 bzw. 7 gelöst. Weitere vorteilhafte Ausgestaltungen und Weiterbildungen der Erfindung gehen aus den Unteransprüchen hervor.

Diesbezüglich weist eine Getriebebaugruppe für ein einen zuschaltbaren Vorderradantrieb aufweisendes Fahrzeug ein Getriebegehäuse, ein Kupplungsmodul und ein Hydraulikmodul auf, wobei das Hydraulikmodul zwischen dem Kupplungsmodul und dem Getriebegehäuse aufgenommen ist. Durch eine derartige Anordnung, die sich vereinfacht auch als Sandwich-Bauweise beschreiben lässt, ergibt sich eine kompakte Bauform. Darüber hinaus können der Vorderradantrieb bzw. das Kupplungsmodul des Vorderradantriebs und das Hydraulikmodul in besonders einfacher Art und Weise an das Getriebegehäuse ganz oder teilweise an- bzw. von diesem abgebaut werden. Der Zugang zu Bauteilen kann erleichtert und so eine einfachere Zugänglichkeit beispielsweise zum Austausch oder zur Reparatur erzielt werden. Die Getriebebaugruppe kann einfacher und gegebenenfalls leichter ausgebildet werden, da die Anzahl an Hydraulikanschlüssen und/oder Dichtungen bzw. -mitteln, die Länge von bzw. die Anzahl von Hydraulikleitungen reduziert und/oder eine direkte Verbindung von Hydraulikkomponenten bzw. -modulen erzielt werden kann. Bei dem Fahrzeug handelt es sich insbesondere um ein landwirtschaftliches oder industrielles Arbeitsfahrzeug, vorzugsweise in der Art eines Ackerschleppers oder eines Traktors. Es kann sich bei dem Fahrzeug aber auch um eine landwirtschaftliche Erntemaschine, eine selbstfahrende Spritze, ein Baufahrzeug, ein Transport-/Zugfahrzeug oder jedes andere geeignete Fahrzeug, insbesondere Nutzfahrzeug, handeln.

Sind das Kupplungsmodul und das Hydraulikmodul an einem Frontbereich bzw. einem den vorderen Rädern des Fahrzeugs zugewandten Bereich des Getriebegehäuses vorgesehen, so kann dies eine kompakte Ausbildung begünstigen, insbesondere dadurch, dass das Kupplungsmodul möglichst nahe an einer Vorderachse bzw. den durch den Vorderradantrieb anzutreibenden vorderen Rädern angeordnet werden kann.

Erfindungsgemäß weist das Hydraulikmodul ein Anschlussmodul und eine Abschlussplatte auf.

Das Anschlussmodul kann hierbei einen oder auch eine Mehr- bzw. Vielzahl von Hydraulikanschlüssen, beispielsweise zur Zu- und/oder Abfuhr von Schmier- und/oder Hydraulikmittel aufweisen. Die Abschlussplatte kann das Hydraulikmodul zur Umgebung abschließen und/oder zusammen mit diesem an dem Getriebegehäuse befestigt sein. Im Sinne der bereits angesprochenen Sandwich-Bauweise grenzt das Anschlussmodul an das Getriebegehäuse und die Abschlussplatte an das Kupplungsmodul an. Eine noch kompaktere Bauweise wird erfindungsgemäß erreicht, wenn die Abschlussplatte wenigstens ein Lager zur Abstützung wenigstens einer Welle aufweist. Bei dieser Welle kann es sich vorzugsweise um eine Vorderradantriebswelle, die vorgesehen ist, um mit einer Vorderachse bzw. den vorderen Rädern des Fahrzeugs derart verbindbar zu sein, dass diese angetrieben werden können, und/oder eine Getriebewelle handeln, mittels der der Vorderradantrieb wirksam mit einem Antrieb des Fahrzeugs verbunden werden kann.

Um die Montage bzw. die Ausrichtung des Anschlussmoduls und der Abschlussplatte bei einer Montage zu vereinfachen bzw. zu erleichtern, kann zwischen dem Anschlussmodul und der Abschlussplatte wenigstens ein, vorzugsweise mit entsprechenden Passöffnungen in dem Anschlussmodul bzw. der Anschlussplatte zusammenwirkender Passstift vorgesehen sein. Besonders günstig ist es, wenn zwei vertikal und/oder horizontal beabstandete Passstifte vorgesehen sind.

Ist wenigstens ein Befestigungsmittel vorgesehen, mittels dem das Kupplungsmodul und das Hydraulikmodul und/oder das Kupplungsmodul und/oder das Hydraulikmodul mit dem Getriebegehäuse verbunden ist, so ergibt sich ein vereinfachter Aufbau, da zur Befestigung der genannten Bauteile eine reduzierte Anzahl von Befestigungsmitteln Anwendung findet.

Eine besonders einfache Montage bzw. Demontage kann erzielt werden, wenn das wenigstens eine Befestigungsmittel lösbar, vorzugsweise in der Art einer Schraubverbindung vorgesehen ist.

Besonders günstig ist es, wenn das Kupplungsmodul ein Kupplungsgehäuse zur Aufnahme einer Kupplung zur Zuschaltung eines insbesondere mechanischen Vorderradantriebs und eine Vorderradantriebswelle aufweist, welche sich vorzugsweise von dem Getriebegehäuse zumindest im Wesentlichen horizontal nach vorn bzw. in Richtung der vorderen Räder erstreckt.

Ein Kupplungsmodul für eine derartige Getriebebaugruppe weist vorzugsweise ein Kupplungsgehäuse, eine Vorderradantriebswelle und eine Kupplung zur selektiven Verbindung der Vorderradantriebswelle mit einem Antrieb des Fahrzeugs auf.

Es ist vorteilhaft, wenn ein Fahrzeug wenigstens eine zuvor beschriebene Getriebebaugruppe aufweist.

Auf diese Weise kann beispielsweise die Komplexität des Fahrzeugs reduziert, Bauraum gespart und/oder anderweitig genutzt und/oder das Fahrzeug kostengünstig hergestellt werden. Bei dem Fahrzeug handelt es sich insbesondere um ein landwirtschaftliches oder industrielles Arbeitsfahrzeug, vorzugsweise in der Art eines Ackerschleppers oder eines Traktors. Es kann sich bei dem Fahrzeug aber auch um eine landwirtschaftliche Erntemaschine, eine selbstfahrende Spritze, ein Baufahrzeug, ein Transport-/Zugfahrzeug oder jedes andere geeignete Fahrzeug, insbesondere Nutzfahrzeug, handeln.

Anhand der Zeichnung, die mehrere Ausführungsbeispiele der Erfindung zeigt, werden nachfolgend die Erfindung sowie weitere Vorteile und vorteilhafte Weiterbildungen der Erfindung und Ausgestaltungen der Erfindung näher beschrieben und erläutert.

### Es zeigt:

- Fig. 1: eine Seitenansicht eines landwirtschaftlichen Fahrzeugs mit einem Antrieb und einer Getriebebaugruppe,
- Fig. 2: die Getriebebaugruppe mit einem Getriebegehäuse, einem Hydraulik- und einem Kupplungsmodul in einer vergrößerten Darstellung,
- Fig. 3: einen Schnitt entlang der Linie A -A durch das Hydraulik- und das Kupplungsmodul gemäß Figur 2 und
- Fig. 4 a bis g: einzelne Schritte einer Montage des Hydraulik- bzw. des Kupplungsmoduls an dem Getriebegehäuse.

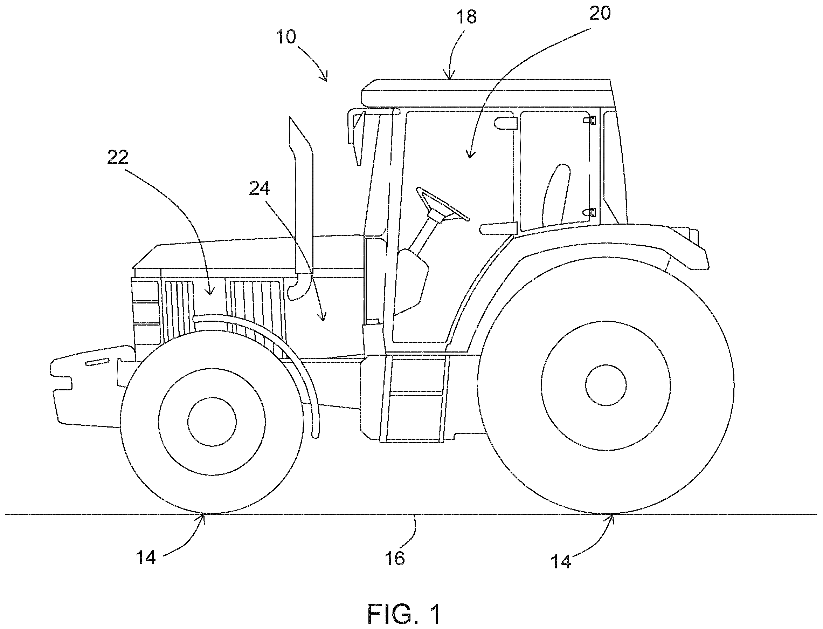

Die Figur 1 der Zeichnung zeigt ein landwirtschaftliches Fahrzeug 10 in der Art eines Ackerschleppers oder Traktors der sich über vordere und rückwärtige Räder 14, 16 auf dem Untergrund 18 abstützt. Das Fahrzeug 10 verfügt über eine Kabine 20, in der ein Bedienerarbeitsplatz 22 angeordnet ist. Darüber hinaus sind ein andeutungsweise gezeigter Antrieb 24 und eine Getriebebaugruppe 26 vorgesehen.

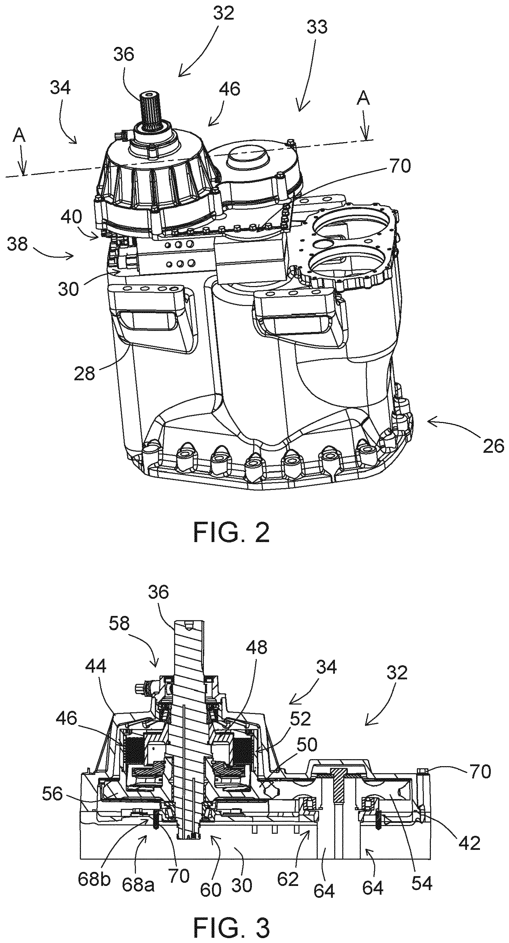

Zur Verdeutlichung wird nun auch auf die Figur 2 der Zeichnung Bezug genommen. Die Getriebebaugruppe 26 weist ein Getriebegehäuse 28, ein Hydraulikmodul 30 und einen Vorderradantrieb 32 auf, mittels dem bei Bedarf eine Vorderachse bzw. die vorderen Räder 14 des Fahrzeugs 10 angetrieben werden können. Der Vorderradantrieb 32 und das Hydraulikmodul sind in einem Frontbereich 33 des Getriebegehäuse 28 montiert, wobei der Vorderradantrieb 32 ein hydraulisch betätigbares Vorderradantriebs-Kupplungsmodul, das im Folgenden verkürzt als Kupplungsmodul 34 bezeichnet werden wird, mit einer Vorderradantriebswelle 36 aufweist. Das Kupplungsmodul 34 kann manuell, durch eine Bedienerperson, oder auch automatisch betätigt werden kann, um eine nicht gezeigte Vorderachse bzw. die vorderen Räder 14 selektiv mit dem Antrieb 24 zu verbinden.

Das Hydraulikmodul 30 weist ein Anschlussmodul 38 mit einer Vielzahl von Anschlüssen 40 zur Zu- und Abfuhr von Hydraulik- und Schmiermittel zu der Getriebebaugruppe 26, und eine Abschlussplatte 42, das Kupplungsmodul 34 ein Kupplungsgehäuse 44 und eine Kupplung 46 auf, auf die im Folgenden noch genauer eingegangen werden wird.

Es wird nun auch auf die Figur 3 der Zeichnung Bezug genommen, in der ein Schnitt durch das Kupplungsgehäuse 44 und die in dem Kupplungsgehäuse 44 angeordnete Kupplung 46, mittels der der Vorderradantrieb 32 zugeschaltet werden kann, gezeigt wird. Die Kupplung 46 ist in bekannter Art und Weise als eine hydraulisch betätigbare Lamellenkupplung mit einem inneren und einem äußeren Lamellenträger 48, 50 und einer Vielzahl von Kupplungslamellen 52 ausgebildet. Darüber hinaus weist der Vorderradantrieb 32 ein durch den Antrieb 24 in Rotation versetzbares erstes Zahnrad 54 und ein zweites, mit dem ersten Zahnrad 54 dauerhaft kämmendes Zahnrad 56 auf.

Der innere Lamellenträger 48 ist fest, das zweite Zahnrad 56 drehbar auf der Vorderradantriebswelle 36 angeordnet, welche wiederum über ein erstes Lager 58 an dem Kupplungsgehäuse 44 und über ein zweites Lager 60 in dem Hydraulikmodul 30 bzw. der Abschlussplatte 42 drehbar aufgenommen wird. Der äußere Lamellenträger 50 ist drehfest mit dem zweiten Zahnrad 56 verbunden, welches drehfest auf einer in der Abschlussplatte 42 durch ein drittes Lager 62 aufgenommen Getriebewelle 64 angeordnet ist.

Durch eine Aktivierung der Kupplung 46 bzw. ein Beaufschlagen der Kupplung 46 mit Hydraulikdruck wird ein Kraftschluss zwischen den Kupplungslamellen 52 erzielt, der das zweite Zahnrad 56 mit der Vorderradantriebswelle 36 verbindet, so dass diese von dem ersten Zahnrad 54 angetrieben bzw. mit Drehmoment beaufschlagt werden kann.

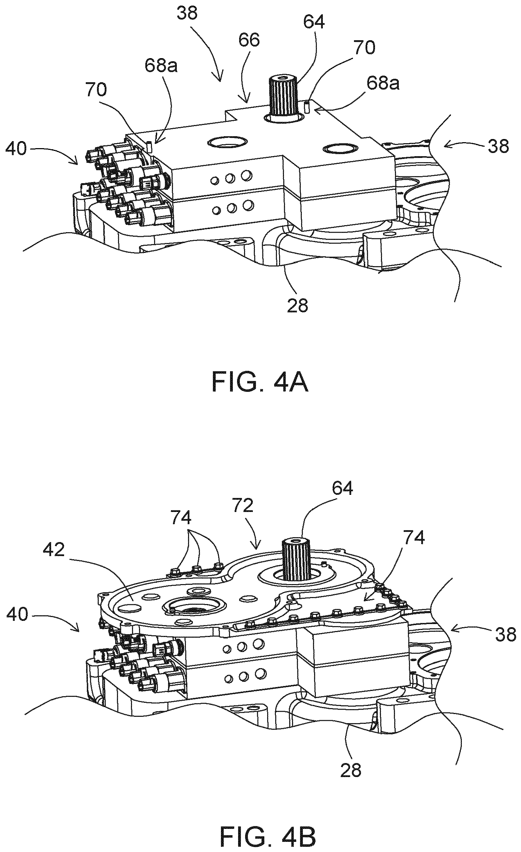

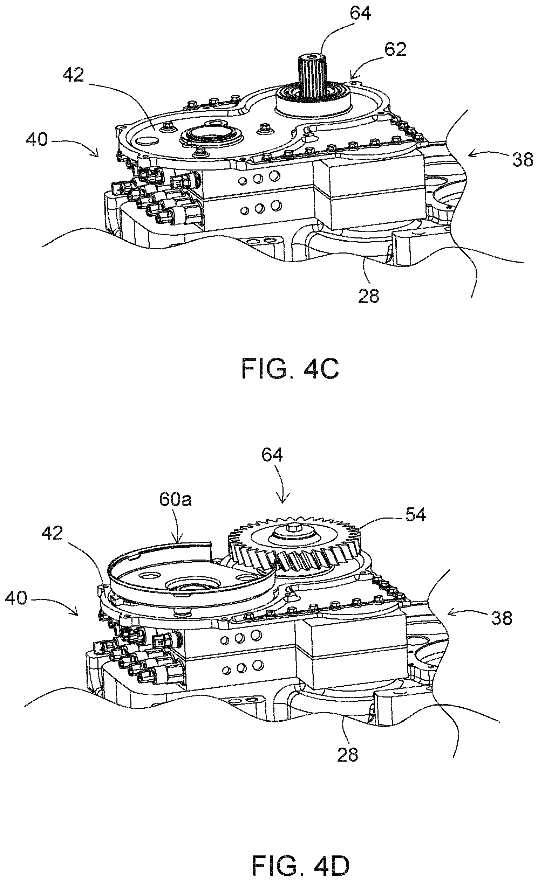

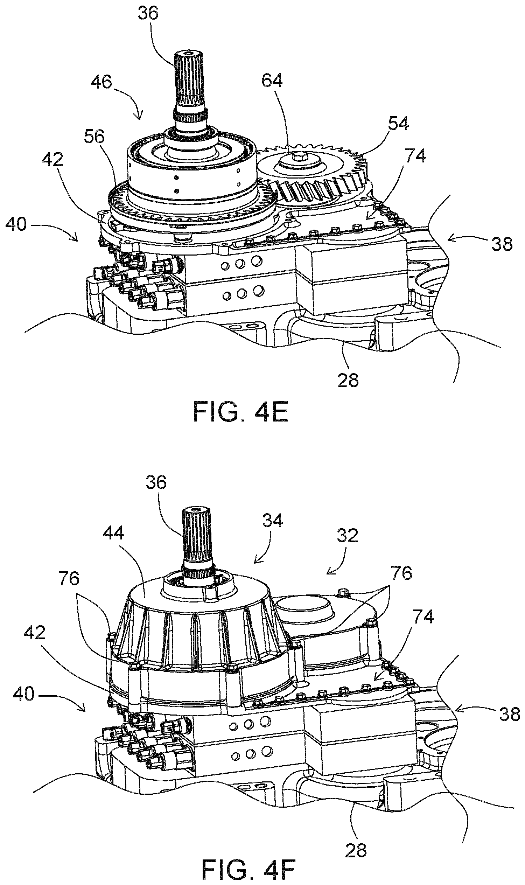

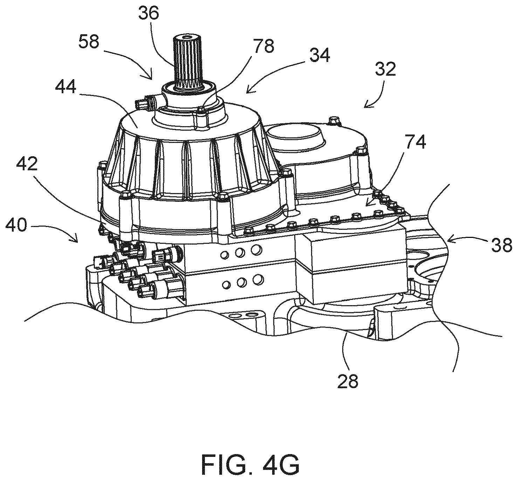

Es wird nun auch auf die Figuren 4 a - g Bezug genommen, in denen eine Montage des Vorderradantriebs 32 bzw. seiner Komponenten vereinfacht dargestellt wird.

Gemäß Figur 4a wird in einem ersten Schritt das Anschlussmodul 40 des Hydraulikmoduls 38 an das Getriebegehäuse 28 herangebracht, wobei die Getriebewelle 64 durch entsprechende Öffnungen 66 in dem Anschlussmodul 40 hindurchgeführt wird. In dem Hydraulikmodul 30 vorgesehen Passöffnungen 68a sind Passstifte 70 aufgenommen.

In einem in der Figur 4b der Zeichnung dargestellten zweiten Schritt wird die Abschlussplatte 42 an das Anschlussmodul 40 derart herangebracht, dass die Passstifte 70 mit entsprechenden Passöffnungen 68b in der Abschlussplatte 42 korrespondieren, um diese auszurichten. Die Getriebewelle 64 wird durch eine Öffnung 72 in der Abschlussplatte 42 hindurchgeführt. Die Abschlussplatte 42 wird nun zusammen mit dem Anschlussmodul 42 mittels als Schrauben ausgebildeter erster Befestigungsmittel 74 mit dem Getriebegehäuse 28 verbunden.

In einem nächsten, in der Figur 4c dargestellten dritten Arbeitsschritt wird das dritte Lager 62 in die Abschlussplatte 42 eingebracht und im Anschluss, wie dies in der Figur 4d gezeigt wird, das erste Zahnrad 54 montiert. Darüber hinaus wird eine Lagerschale 60a des zweiten Lagers 60 montiert.

Im Schritt fünf der Montage (siehe Figur 4e) wird die Kupplung 46 mit der Vorderradantriebswelle 36 in die Lagerschale 60a eingesetzt. Im folgenden Schritt sechs erfolgt, wie dies in Figur 4f gezeigt wird, die Montage des die Komponenten umschließenden Kupplungsgehäuses 44, welches mittels als Schrauben ausgebildeter zweiter Befestigungsmittel 76 mit der Abschlussplatte 42 und dem Getriebegehäuse 28 verbunden wird.

Im abschließenden Schritt sechs erfolgt die Montage des ersten Lagers 58, welches mit dem Kupplungsgehäuse 44 ebenfalls über als Schrauben ausgebildete dritte Befestigungsmittel 78 verbunden wird.

Entsprechend der vorstehenden Beschreibung können die genannten Schritte zur Demontage zumindest im Wesentlichen in umgekehrter Reihenfolge ausgeführt werden.

### Wortliste

| | | | |
|---|---|---|---|
| 10 | Fahrzeug | 66 | Öffnungen |
| 14 | vordere Räder | 68a, b | Passöffnungen |
| 16 | hintere Räder | 70 | Passstifte |
| 18 | Untergrund | 72 | Öffnung |
| 20 | Kabine | 74 | erste Befestigungsmittel |
| 22 | Bedienerarbeitsplatz | 76 | zweite Befestigungsmittel |
| 24 | Antrieb | 78 | dritte Befestigungsmittel |
| 26 | Getriebebaugruppe | | |
| 28 | Getriebegehäuse | | |
| 30 | Hydraulikmodul | | |
| 32 | Vorderradantrieb | | |
| 33 | Frontbereich | | |
| 34 | Kupplungsmodul | | |
| 36 | Vorderradantriebswelle | | |
| 38 | Anschlussmodul | | |
| 40 | Anschlüsse | | |
| 42 | Abschlussplatte | | |
| 44 | Kupplungsgehäuse | | |
| 46 | Kupplung | | |
| 48, | 50 Lamellenträger | | |
| 52 | Kupplungslamellen | | |
| 54 | erstes Zahnrad | | |
| 56 | zweites Zahnrad | | |
| 58 | erstes Lager | | |
| 60 | zweites Lager | | |
| 60a | Lagerschale | | |
| 62 | drittes Lager | | |
| 64 | Getriebewelle | | |

## Patentansprüche

1. Getriebebaugruppe (26) für ein einen zuschaltbaren Vorderradantrieb (32) aufweisendes Fahrzeug (10), insbesondere ein landwirtschaftliches oder industrielles Arbeitsfahrzeug, mit einem Getriebegehäuse (28), einem Kupplungsmodul (34) und einem Hydraulikmodul (30), und das Hydraulikmodul (30) zwischen dem Kupplungsmodul (34) und dem Getriebegehäuse (28) aufgenommen ist, wobei das Hydraulikmodul (30) ein Anschlussmodul (38) und eine Abschlussplatte (42) aufweist und das Anschlussmodul (38) an das Getriebegehäuse (28) und die Abschlussplatte (42) an das Kupplungsmodul (34) angrenzt, **dadurch gekennzeichnet, dass** zwischen dem Anschlussmodul (38) und der Abschlussplatte (42) wenigstens ein mit entsprechenden Passöffnungen (68a, b) in dem Anschlussmodul bzw. der Abschlussplatte (42) zusammenwirkender Passstift (70) vorgesehen ist, und die Abschlussplatte (42) wenigstens ein Lager (60, 62) zur Abstützung zumindest einer Vorderradantriebswelle und/oder einer Getriebewelle (64) aufweist.

2. Getriebebaugruppe nach Anspruch 1, wobei das Kupplungsmodul
(34) und das Hydraulikmodul (30) an einem Frontbereich (33) bzw. einem den vorderen Rädern (14) des Fahrzeugs (10) zugewandten Bereich des Getriebegehäuses (28) vorgesehen sind.

3. Getriebebaugruppe nach einem der vorherigen Ansprüche, wobei das wenigstens ein Befestigungsmittel (70, 72, 74) vorgesehen ist, mittels dem das Kupplungsmodul (34) und das Hydraulikmodul (30) und/oder das Kupplungsmodul (34) und/oder das Hydraulikmodul (34) mit dem Getriebegehäuse (28) verbunden ist.

4. Getriebebaugruppe nach Anspruch 3, wobei das wenigstens eine Befestigungsmittel (74, 76, 78) lösbar, vorzugsweise in der Art einer Schraubverbindung vorgesehen ist.

5. Getriebebaugruppe nach einem der vorherigen Ansprüche, wobei das Kupplungsmodul (34) ein Kupplungsgehäuse (44) zur Aufnahme einer Kupplung (46) zur Zuschaltung eines insbesondere mechanischen Vorderradantriebs (32) und eine Vorderradantriebswelle (36) aufweist, welche sich vorzugsweise von dem Getriebegehäuse (28) zumindest im Wesentlichen horizontal nach vorn bzw. in Richtung der vorderen Räder (14) erstreckt.

6. Kupplungsmodul (34) einer Getriebebaugruppe (26) nach einem der vorherigen Ansprüche mit einem Kupplungsgehäuse (44), einer Vorderradantriebswelle (36) und einer Kupplung (46) zur selektiven Verbindung der Vorderradantriebswelle (36) mit einem Antrieb (24) eines Fahrzeugs (10).

7. Fahrzeug (10), insbesondere ein landwirtschaftliches oder industrielles Arbeitsfahrzeug, mit einer Getriebebaugruppe (26) nach einem der Ansprüche 1 bis 5.

## Claims

1. Transmission assembly (26) for a vehicle (10), in particular an agricultural or industrial work vehicle, with an engageable front-wheel drive (32), having a transmission housing (28), a clutch module (34) and a hydraulic module (30), wherein the hydraulic module (30) is received between the clutch module (34) and the transmission housing (28), wherein the hydraulic module (30) has a connecting module (38) and a closing plate (42) and the connecting module (38) adjoins the transmission housing (28) and the closing plate (42) adjoins the clutch module (34), **characterized in that** at least one locating pin (70), cooperating with corresponding locating openings (68a, b) in the connecting module and/or the closing plate (42), is provided between the connecting module (38) and the closing plate (42), and the closing plate (42) has at least one bearing (60, 62) for supporting at least one front-wheel drive shaft and/or a transmission shaft (64).

2. Transmission assembly according to Claim 1, wherein the clutch module (34) and the hydraulic module (30) are provided on a front region (33) and/or a region of the transmission housing (28) facing towards the front wheels (14) of the vehicle (10).

3. Transmission assembly according to one of the preceding claims, wherein the at least one fastening means (70, 72, 74) is provided, the clutch module (34) and the hydraulic module (30) and/or the clutch module (34) and/or the hydraulic module (34) being connected thereby to the transmission housing (28).

4. Transmission assembly according to Claim 3, wherein the at least one fastening means (74, 76, 78) is provided to be releasable, preferably in the manner of a screw connection.

5. Transmission assembly according to one of the preceding claims, wherein the clutch module (34) has a clutch housing (44), for receiving a clutch (46) for engaging an in particular mechanical front-wheel drive (32), and a front-wheel drive shaft (36) which preferably extends at least substantially horizontally from the transmission housing (28) towards the front and/or in the direction of the front wheels (14).

6. Clutch module (34) of a transmission assembly (26) according to one of the preceding claims, having a clutch housing (44), a front-wheel drive shaft (36) and a clutch (46) for selectively connecting the front-wheel drive shaft (36) to a drive (24) of a vehicle (10).

7. Vehicle (10), in particular an agricultural or industrial work vehicle, having a transmission assembly (26) according to one of Claims 1 to 5.

## Revendications

1. Ensemble de transmission (26) pour un véhicule (10) présentant une traction avant (32) enclenchable, notamment un véhicule de travail agricole ou industriel, avec un carter de transmission (28), un module d'embrayage (34) et un module hydraulique (30), et le module hydraulique (30) étant reçu entre le module d'embrayage (34) et le carter de transmission (28), le module hydraulique (30) présentant un module de raccordement (38) et une plaque de fermeture (42), le module de raccordement (38) étant adjacent au carter de transmission (28) et la plaque de fermeture (42) étant adjacente au module d'embrayage (34), **caractérisé en ce qu'**entre le module de raccordement (38) et la plaque de fermeture (42), il est prévu au moins une broche d'ajustage (70) coopérant avec des ouvertures d'ajustage correspondantes (68a, b) dans le module de raccordement ou la plaque de fermeture (42), et la plaque de fermeture (42) présente au moins un palier (60, 62) pour soutenir au moins un arbre de traction avant et/ou un arbre de transmission (64).

2. Ensemble de transmission selon la revendication 1, dans lequel le module d'embrayage (34) et le module hydraulique (30) sont prévus respectivement sur une zone frontale (33) et une zone du carter de transmission (28) tournée vers les roues avant (14) du véhicule (10).

3. Ensemble de transmission selon l'une quelconque des revendications précédentes, dans lequel l'au moins un moyen de fixation (70, 72, 74) est prévu, au moyen duquel le module d'embrayage (34) et le module hydraulique (30) et/ou le module d'embrayage (34) et/ou le module hydraulique (34) sont reliés au carter de transmission (28) .

4. Ensemble de transmission selon la revendication 3, dans lequel l'au moins un moyen de fixation (74, 76, 78) est prévu sous forme amovible, de préférence à la manière d'un assemblage par vis.

5. Ensemble de transmission selon l'une quelconque des revendications précédentes, dans lequel le module d'embrayage (34) présente un carter d'embrayage (44) pour recevoir un embrayage (46) pour l'enclenchement d'une traction avant (32), notamment mécanique, et un arbre de traction avant (36) qui s'étend de préférence au moins essentiellement horizontalement vers l'avant ou en direction des roues avant (14) à partir du carter de transmission (28).

6. Module d'embrayage (34) d'un ensemble de transmission (26) selon l'une quelconque des revendications précédentes, avec un carter d'embrayage (44), un arbre de traction avant (36) et un embrayage (46) pour relier sélectivement l'arbre de traction avant (36) à un entraînement (24) d'un véhicule (10).

7. Véhicule (10), notamment véhicule de travail agricole ou industriel, avec un ensemble de transmission (26) selon l'une quelconque des revendications 1 à 5.
